(19) Europäisches Patentamt / European Patent Office / Office européen des brevets

(11) EP 4 491 396 A1

(12) **EUROPEAN PATENT APPLICATION**

(43) Date of publication:
**15.01.2025 Bulletin 2025/03**

(21) Application number: **23184456.4**

(22) Date of filing: **10.07.2023**

(51) International Patent Classification (IPC):
***B32B 27/32*** *(2006.01)*

(52) Cooperative Patent Classification (CPC):
(C-Sets available)
**C08J 5/18;** C08J 2323/14; C08J 2423/08;
C08L 2203/20; H01G 4/18 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Borealis AG**
**1020 Vienna (AT)**
- **TOPAS Advanced Polymers GmbH**
**65479 Raunheim (DE)**

(72) Inventors:
- **GITSAS, Antonios**
**4021 Linz (AT)**
- **JAMIESON, Scott**
**4021 Linz (AT)**
- **TRANCHIDA, Davide**
**4021 Linz (AT)**
- **GKOURMPIS, Thomas**
**444 86 Stenungsund (SE)**
- **GOERLITZ, Wolfram**
**65193 Wiesbaden (DE)**
- **HATKE, Wilfried**
**65779 Kelkheim (DE)**

(74) Representative: **Ter Meer Steinmeister & Partner Patentanwälte mbB**
**Nymphenburger Straße 4**
**80335 München (DE)**

# (54) COMPOSITION COMPRISING POLYPROPYLENE AND CYCLIC OLEFIN POLYMER WITH IMPROVED DISPERSION PROPERTIES AND BREAKDOWN PERFORMANCE

(57) The present invention relates to a composition comprising 83 to 87 wt.% of a polypropylene homopolymer and 13 to 17 wt.% of a cyclic olefin polymer comprising cyclic olefin units, wherein the content of the cyclic olefin units is in a range of from 73 to 77 wt.% or in a range from 82 to 86 wt.%, based on the total weight of the cyclic olefin polymer. The present invention is, furthermore, directed to a film comprising the composition, wherein the film may be a cast film or a biaxially oriented film. Apart from that, a capacitor comprising the biaxially oriented film is provided.

EP 4 491 396 A1

(52) Cooperative Patent Classification (CPC): (Cont.)

C-Sets
**C08L 23/12, C08L 23/0823**

## Description

### Field of the invention

The present invention relates to a composition comprising 83 to 87 wt.% of a polypropylene homopolymer and 13 to 17 wt.% of a cyclic olefin polymer comprising cyclic olefin units, wherein the content of the cyclic olefin units is in a range of from 73 to 77 wt.% or in a range from 82 to 86 wt.%, based on the total weight of the cyclic olefin polymer. The present invention is, furthermore, directed to a film comprising the composition, wherein the film may be a cast film or a biaxially oriented film. Apart from that, a capacitor comprising the biaxially oriented film is provided.

### Technical background

Polypropylene has a relatively high dielectric constant, a low dissipation factor and a good dielectric strength. Due to this, polypropylene has been successfully used as a dielectric in various capacitor film applications. Yet, an issue with the known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in different ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.% of propylene homopolymer with a specific melt flow rate and a very low ash content, 0.1 to 5.0 wt.% of long chain branched polypropylene and up to 1000 ppm of beta-nucleating agent.

WO 2018/210854 A1 and WO 2018/197034 A1 suggest that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin copolymers having a glass transition temperature in a broad range from 120 to 170 °C.

Yet, in the above approaches, the increase in the temperature resistance of the capacitor polypropylene compositions has only been achieved at the expense of other crucial properties. Mechanical properties such as low shrinkage and high stiffness as well as the capability to endure high voltages have, for example, been sacrificed to a certain extent.

Thus, there is still a need to provide polypropylene compositions having an improved property set for capacitor applications, *i.e.* a high temperature resistance, a high electrical breakdown strength and suitable mechanical properties. Accordingly, it is an objective of the present invention to overcome the disadvantages of the known compositions and to provide an according polypropylene composition. Another obj ective of the present invention is the provision of a polypropylene film having superior performance in capacitor applications. Last but not least, the present invention aims at providing a capacitor with improved specifications. Furthermore, capacitor films also need to have a high electrical breakdown strength and good mechanical properties such as a low shrinkage and a high stiffness.

### Summary of the Invention

The above objectives are solved by the polypropylene composition with the features of independent claim 1, the film with the features of claim 10, and the capacitor with the features of claim 13.

The polypropylene composition according to the present invention comprises 83 to 87 wt.% based on the total weight of the polypropylene composition of propylene homopolymer (A), and 13 to 17 wt.% based on the total weight of the polypropylene composition of a cyclic olefin polymer (B) comprising cyclic olefin units and non-cyclic olefin units, wherein the content of the cyclic olefin units is in a range of 73 to 77 wt.% or in a range of 82 to 86 wt.%, based on the total weight of the cyclic olefin polymer (B).

The content of the cyclic olefin polymer (B) can be determined by measuring the xylene soluble content of the polypropylene composition.

The content of the cyclic olefin units of the cyclic olefin polymer (B) may be determined by $^{13}C$ NMR spectroscopy, in case the cyclic olefin polymer (B) is soluble, or may be calculated from the glass transition temperature of the cyclic olefin polymer, in case in case the cyclic olefin polymer (B) is insoluble. If the cyclic olefin polymer (B) is a norbomene-ethylene

copolymer and the cyclic olefin units are norbornene units, their content can be determined as described in Macromol. Chem. Phys. 199, 1221-1232 (1998).

Since the polypropylene composition contains polypropylene homopolymer (A) in a range of from 83 to 87 wt.% based on the total weight of the composition, the amount(s) of the remaining component(s) are sufficiently high to achieve the desired properties. Preferably, the polypropylene composition comprises 83.5 to 86.5 wt.%, more preferably 84.0 to 86.0 wt.%, in particular about 85.0 wt.% of polypropylene homopolymer (A), based on the total weight of the composition. On the other hand, the polypropylene composition preferably comprises 13.5 to 16.5 wt.%, more preferably 14.0 to 16.0 wt.% and in particular about 15.0 wt.% of cyclic olefin polymer (B), based on the total weight of the composition.

In one embodiment, the polypropylene composition further comprises additives. The polypropylene composition may then comprise 82 to 86 wt.% based on the total weight of the polypropylene composition of propylene homopolymer (A), 12 to 16 wt.% based on the total weight of the polypropylene composition of a cyclic olefin polymer (B) comprising cyclic olefin units and non-cyclic olefin units, and 0 to 2 wt.-% additives, wherein the content of the cyclic olefin units is in a range of 73 to 77 wt.% or in a range of 82 to 86 wt.%, based on the total weight of the cyclic olefin polymer (B).

In a preferred embodiment, the polypropylene composition is obtained by melt-blending the polypropylene homopolymer (A) and the cyclic olefin polymer (B). A device, in which melt-blending can be carried out, may be selected from the group consisting of kneaders, mills and extruders.

In contrast to dry-blending approaches, the melt-blending approach allows producing the polypropylene composition with high homogeneity. The cyclic olefin polymer (B) is finely and uniformly dispersed in a matrix of the polypropylene homopolymer (A). Generally, the dispersion state of the cyclic olefin polymer is believed to have an influence on the mechanical and electrical properties of the propylene composition. In particular, a poor dispersion likely results in local stresses which lead to defects during stretching of a film that comprises the polypropylene composition. Moreover, if dispersion of the cyclic olefin polymer is insufficient, electrical breakdown of a film that comprises the polypropylene composition is more likely to occur.

The dimensions and the shape of the domains which are formed by the cyclic olefin polymer (B) in the dispersion can be analyzed with an atomic force microscope (AFM) or another type of microscope. In view of the above, when a 250 μm thick non-oriented cast film consisting of the polypropylene composition is analyzed with AFM, preferably more than 50% ($d_{50}$), in particular more than 90% ($d_{90}$), such as 95% ($d_{95}$), of the domains of the cyclic olefin polymer (B) have a largest dimension that is smaller than 2.0 μm.

Polypropylene homopolymer (A)

The expression "polypropylene homopolymer" as used in the present invention relates to a polypropylene that consists substantially, *i.e.* of at least 99.5 wt.%, more preferably of at least 99.8 wt.%, of propylene units. Preferably, only propylene units are detectable in the polypropylene homopolymer via $^{13}$C NMR spectroscopy, as described in the example section below.

Preferably, the polypropylene homopolymer is a linear polypropylene, i.e. a polypropylene that does not have a detectable amount of long-chain or short-chain branches.

Furthermore, it is preferred that the propylene homopolymer (A) used in the composition of the present invention has a melt flow rate (MFR) in a specific range. The melt flow rate measured under a load of 2.16 kg at 230 °C according to ISO 1133 is denoted as $MFR_2$(230 °C).

It is preferred that the polypropylene homopolymer (A) has an $MFR_2$ (230 °C) measured according to ISO 1133 from 1.0 to 10 g/10 min, preferably from 1.0 to 7.0 g/10min, more preferably from 1.0 to 5.0 g/10 min.

One important aspect of polypropylene compositions for capacitor film applications is their high purity. In particular, a low ash content is desirable, as otherwise dielectric properties are negatively affected. Accordingly, it is appreciated that the ash content of the polypropylene homopolymer (A) is low. Preferably, the polypropylene homopolymer (A) has an ash content measured according to ISO 3451-1 (1997) of 60 ppm or less, more preferably of equal to or less than 50 ppm, more preferably of equal to or less than 40 ppm, more preferably of 30 ppm or less, like in the range of 10 to 30 ppm. It is also appreciated that the ash content of the entire polypropylene composition is rather low, i.e. it has an ash content measured according to ISO 3451-1 (1997) of equal to or below 60 ppm, more preferably equal to or below 50 ppm, more preferably equal to or below 40 ppm, more preferably equal to or below 30 ppm, like in the range of 10 to 30 ppm. As usual, 1 ppm of any component, such as ash, corresponds to 1 mg of said component in 1 kg of the polypropylene composition.

In a preferred embodiment of the present invention, the polypropylene homopolymer (A) is a high isotactic polypropylene. It is more appreciated that the polypropylene homopolymer (A) is a high isotactic polypropylene having a content of isotactic pentad fraction, measured by $^{13}$C-NMR spectroscopy, from 93 to 99.5 %, preferably 95 to 99.0 %, more preferably from 96 to 98.5%.

Polypropylene compositions engineered for capacitor applications should, furthermore, ideally feature a rather low xylene cold soluble (XCS) content. Therefore, in a further preferred embodiment of the present invention, the

polypropylene homopolymer (A) of the instant invention has a XCS content, measured according to ISO16152, of from 0.1 to 4.0 wt.%, preferably of from 0.3 to 2.0 wt.%. It is in particular appreciated that the polypropylene homopolymer (A) may feature a XCS content, measured according to ISO16152, of below 2.0 wt.%, more preferably of equal to or below 1.8 wt.%, yet more preferably equal to or below 1.6 wt.%.

It is further preferred that the propylene homopolymer (A) has a crystallization temperature in a specific range to enable good processability of the polypropylene composition. In a preferred embodiment of the invention, the propylene homopolymer (A) has a crystallization temperature $T_c$, as measured according to ISO 11357, *i.e.* measured by differential scanning calorimetry (DSC) at a scan rate of 10 K/min, from 110 to 130 °C, preferably from 110 to 120 °C.

Cyclic olefin polymer (B)

The cyclic olefin polymer preferably is a thermoplastic polymer.

It is appreciated that the term "cyclic olefin polymer" refers to a polymer comprising a cyclic olefin unit. The cyclic olefin polymer may be a cyclic olefin homopolymer or a cyclic olefin copolymer.

Within the present invention the term "copolymer" refers to polymers prepared from at least two different monomers. In other words, the term "copolymer" also covers terpolymers and copolymers with four or more different monomeric units. Thus, a cyclic olefin polymer may be a copolymer comprising a first monomeric unit, which is a cyclic olefin unit, and at least one second monomeric unit, which is different from the first monomeric unit, such as a non-cyclic olefin unit. Cyclic olefin copolymers comprising at least a first cyclic olefin unit and a second cyclic olefin unit, which is different from the first cyclic olefin unit, are equally covered by the term "cyclic olefin polymer".

The cyclic olefin polymer may either be obtained by ring-opening or ring-sustaining polymerization of at least one cyclic olefin monomer. Among these alternatives, a cyclic olefin polymer obtained by ring-sustaining polymerization is preferred.

In a further preferred embodiment, the at least one cyclic olefin monomer is selected from the group consisting of cyclopentadiene, tetracyclododecen, norbornene and derivatives of the aforementioned compounds. Norbornene and its derivatives are particularly preferred examples for the at least one cyclic olefin monomer.

Norbornene and its derivatives are preferably compounds according to formula (I),

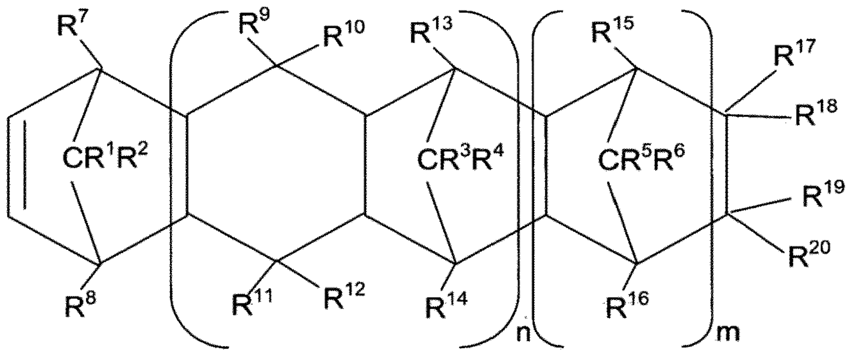

(I),

wherein n is 0 or 1,

m is 0 or an integer, in particular 0 or 1,

$R^1$, $R^2$, $R^3$, $R^4$, $R^5$, $R^6$ are independently selected from the group consisting of hydrogen, halogen, an alkyl group, a cycloalkyl group, an aryl group and an alkoxy group,

$R^7$, $R^8$, $R^9$, $R^{10}$, $R^{11}$, $R^{12}$, $R^{13}$, $R^{14}$, $R^{15}$, $R^{16}$ are independently selected from the group consisting of hydrogen and an alkyl group,

$R^{17}$, $R^{18}$, $R^{19}$, $R^{20}$ are independently selected from the group consisting of hydrogen, halogen, an alkyl group, a cycloalkyl group and an aryl group wherein $R^{17}$ and $R^{19}$ may alternatively form a cyclic ring or a cyclic system, wherein the cyclic ring or cyclic system may be saturated or unsaturated.

Further and equally preferred examples of norbornene derivatives are the compounds according to formula (II),

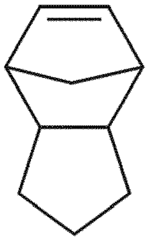 , 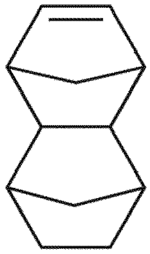 , 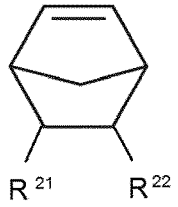 , 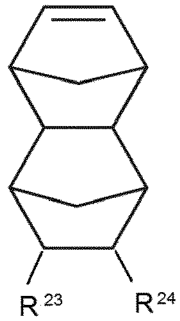 (II)

wherein $R^{21}$ and $R^{22}$ are independently selected from the group consisting of hydrogen, a $C_5$-$C_7$ cycloalkyl group, $C_5$-$C_7$ aryl group and a $C_1$-$C_4$ alkyl group and wherein $R^{23}$ and $R^{24}$ are independently selected from the group consisting of hydrogen and a $C_1$-$C_4$ alkyl group.

The non-cyclic olefin monomer can be an alpha-olefin. Non-limiting examples of alpha-olefins are $C_2$-$C_8$ alpha-olefins, such as alpha-olefins selected from the group consisting of ethylene, propylene, 1-butene, 2-methyl-1-propene (isobutylene) and 3-methyl-1-butene. Preferred alpha-olefins are linear $C_2$-$C_8$ alpha-olefins, such as ethylene and propylene. Particularly preferred is ethylene as alpha-olefin.

In one embodiment, the cyclic olefin polymer is a cyclic olefin copolymer selected from the group of norbornene-ethylene copolymers and tetracyclododecene-ethylene copolymers. Non-limiting examples of cyclic olefin polymers are polymers commercially available as APEL® from Mitsui Chemical or as TOPAS® from TOPAS Advanced Polymers.

The glass transition temperature (hereinafter also referred to as "Tg") of the cyclic olefin polymer may be controlled by the type of monomers used, *e.g.* by the type of the at least one cyclic olefin monomer and optionally, if present, by the type of the non-cyclic olefin monomer. Further, in case the cyclic olefin polymer is a cyclic olefin copolymer, the amount of the cyclic olefin monomer may be used to customize the glass transition temperature of the overall composition. From norbornene-ethylene copolymers it is, for example, known that a higher glass transition temperature may be achieved by increasing the content of norbornene. The same applies to combinations of other cyclic olefin monomers with non-cyclic olefin monomers.

Accordingly, it is appreciated that the cyclic olefin units in the cyclic olefin polymer (B) are preferably selected from the group consisting of cyclopentadiene units, norbornene units, tetracyclododecen units and derivatives thereof, and that the non-cyclic olefin units in the cyclic olefin polymer (B) are preferably selected from linear $C_2$-$C_8$ alpha-olefin units. In view of this, the polypropylene composition according to the present invention may also be defined as a composition comprising 83 to 87 wt.% based on the total weight of the polypropylene composition of propylene homopolymer (A), and 3 to 17 wt.% based on the total weight of the polypropylene composition of a cyclic olefin polymer (B) comprising norbornene units and ethylene units, wherein the content of the norbornene units is in a range of 73 to 77 wt.% or in a range of 82 to 86 wt.%, based on the total weight of the cyclic olefin polymer (B).

In a first embodiment of the present invention, the content of the cyclic olefin units, such as norbornene units, is in the range of 73 to 77 wt.%, based on the total weight of the cyclic olefin polymer (B). In this case, the content of the cyclic olefin units, such as norbornene units, is preferably 73.5 to 76.5 wt.%, more preferably 74.0 to 76.0 wt.%, in particular about 75.0 wt.%, based on the total weight of the cyclic olefin polymer (B). Further in this case, the content of the non-cyclic olefin units, such as alpha-olefin units, like ethylene units, is preferably 23.5 to 26.5 wt.%, more preferably 24.0 to 26.0 wt.%, in particular about 25.0 wt.% based on the total weight of cyclic olefin polymer (B).

In the first embodiment, when the content of the cyclic olefin units, such as the norbornene units, is in the range of 73 to 77 wt.%, the corresponding cyclic olefin polymer (B) preferably has a

- a glass transition temperature $T_g$, measured according to ISO 11357, in a range of from 125 to 145 °C, more preferably from 130 to 140 °C, even more preferably from 132 to 138°C, in particular about 134 °C; and/or
- a melt flow rate $MFR_2$ (260 °C / 2.16 kg), measured according to ISO 1133, in a range of from 40 to 55 g/10 min, more preferably from 45 to 50 g/10 min, in particular about 48 g/10 min.

It turned out that a cyclic olefin polymer having the above content of cyclic olefin units, such as norbornene units, and one or both of the above-indicated glass transition temperature $T_g$ and melt flow rate $MFR_2$ (260 °C / 2.16 kg), enables an excellent dispersibility of the cyclic olefin polymer (B) in the matrix of the polypropylene homopolymer (A).

In a second embodiment of the invention, the content of the cyclic olefin units, such as the norbornene units, is in the range of 82 to 86 wt.%, preferably 82.5 to 85.0 wt.%, more preferably 82.5 to 84.0 wt.%, in particular about 83 wt.% based on the total weight of the cyclic olefin polymer (B). Further, the content of the non-cyclic olefin units, preferably alpha-olefin units, such as ethylene units, is preferably 14 to 18 wt.%, preferably 15.0 to 17.5 wt.%, more preferably 16.0 to 17.5 wt.%, in particular about 17.0 wt.% based on the total weight of cyclic olefin polymer (B).

In the second embodiment, when the content of cyclic olefin units, such as norbornene units, is in the range of 82 to 86 wt.%, the corresponding cyclic olefin polymer (B) preferably has a

- a glass transition temperature $T_g$, measured according to ISO 11357, in a range of from 170 to 185 °C, more preferably from 175 to 180 °C, in particular about 178 °C; and/or
- a melt flow rate $MFR_2$ (260 °C / 2.16 kg), measured according to ISO 1133, in a range of from 0.5 to 5 g/10 min, more preferably from 1 to 5 g/10 min, in particular about 2 g/10 min.

Similar to the first embodiment described above, it turned out that a cyclic olefin polymer in the second embodiment, i.e. having the above content of cyclic olefin units, such as norbornene units, in the range of 82 to 86 wt.% and one or both of the above indicated glass transition temperature $T_g$ and melt flow rate $MFR_2$ (260 °C / 2.16 kg), enables an excellent dispersibility of the cyclic olefin polymer (B) in a matrix of the polypropylene homopolymer (A).

Non-limiting examples of cyclic olefin polymers fulfilling the above specifications are polymers commercially available as APEL® from Mitsui Chemical or as TOPAS® from TOPAS Advanced Polymers.

Additives

The additives may be customary additives which are used as processing aids for film production and/or which are added to the composition in order to achieve or improve a desired property in the film to be produced, e.g. to ensure a positive effect on the production, storage, processing or product properties.

Additives may be non-polymeric additives and/or polymeric additives. For example, the additives may be selected from the group consisting of antioxidants, stabilizers, acid scavengers, nucleating agents, colorants, plasticizers, slip agents, antiscratch agents, dispersing agents, processing aids, lubricants, pigments, dyes, antistatic agent, reinforcing agents, flame retardants and the like. Preferably, additives are selected from the group consisting of antioxidants, stabilizers, acid scavengers and nucleating agents.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butyl hydroxy toluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the polypropylene composition. More preferably, antioxidants and stabilizers are present in a total amount of from 800 to 7000 ppm, still more preferably of from 1000 to 6000 ppm, and in particular from 1500 to 6000 ppm, based on the total weight of the polypropylene composition. In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 50 ppm to 2000 ppm, more preferably from 50 ppm to 1000 ppm.

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butyl hydroxy toluene (sold under trade names Ionol CP and Vulkanox BHT), calcium stearate and combinations thereof.

The nucleating agent may, in one embodiment be a beta-nucleating agent.

The term "beta-nucleating agent" refers to any nucleating agent which is suitable for inducing crystallization of propylene polymers in the hexagonal or pseudohexagonal modification. Mixtures of such nucleating agents may also be employed.

Suitable types of beta-nucleating agents are dicarboxylic acid derivative type diamide compounds from $C_5$-$C_8$-cycloalkyl monoamines or $C_6$-$C_{12}$-aromatic monoamines and $C_5$-$C_8$aliphatic, $C_5$-$C_8$-cycloaliphatic or $C_6$-$C_{12}$-aromatic dicarboxylic acids, *e.g.*

N,N'-di-$C_5$-$C_8$-cycloalkyl-2,6-naphthalene dicarboxamide compounds such as

N,N'-dicyclohexyl-2,6-naphthalene dicarboxamide and

N,N'-dicyclooctyl-2,6-naphthalene dicarboxamide,

N,N'-di-$C_5$-$C_8$-cycloalkyl-4,4-biphenyldicarboxamide compounds such as

N,N'-dicyclohexyl-4,4-biphenyldicarboxamide and

N,N'-di cyclopentyl-4, 4-biphenyldicarboxamide,

N,N'-di-$C_5$-$C_8$-cycloalkyl-terephthalamide compounds such as

N,N'-dicyclohexylterephthalamide and N,N'-dicyclopentylterephthalamide,

N,N'-$C_5$-$C_8$-cycloalkyl-1,4-cyclohexanedicarboxamide compounds such as

N,N'-dicyclo-hexyl-1,4-cyclohexanedicarboxamide and

N,N'-dicyclohexyl-1,4-cyclopentanedicarboxamide,

diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g.

N,N'-$C_6$-$C_{12}$-arylene-bis-benzamide compounds such as

N,N'-p-phenylene-bis-benzamide and N,N'-1,5-naphthalene-bis-benzamide,

N,N'-$C_5$-$C_8$-cycloalkyl-bis-benzamide compounds such as

N,N'-1,4-cyclopentane-bis-benzamide and N,N'-1,4-cyclohexane-bis-benzamide,

N,N'-p-$C_6$-$C_{12}$-arylene-bis-$C_5$-$C_8$-cycloalkyl carboxamide compounds such as

N,N'-1,5-naphthalene-bis-cyclohexanecarboxamide and

N,N'-1,4-phenylene-bis-cyclohexanecarboxamide, and

N,N'-$C_5$-$C_8$-cycloalkyl-bis-cyclohexanecarboxamide compounds such as

N,N'-1,4-cyclopentane-bis-cyclohexanecarboxamide and

N,N'-1,4-cyclohexane-bis-cyclohexanecarboxamide,

amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$aromatic monocarboxylic acid chlorides and $C_5$-$C_8$-alkyl-, $C_5$-$C_8$-cycloalkyl- or $C_6$-$C_{12}$aromatic monoamines, e.g.

N-phenyl-5-(N-benzoylamino)pentane amide and

N-cyclohexyl-4-(N-cyclohexyl-carbonylamino)benzamide.

Further suitable beta-nucleating agents are:

quinacridone type compounds, e.g.

5,12-dihydro-quino[2,3-*b*]acridine-7,14-dione (i.e. quinacridone), dimethylquinacridone and dimethoxy quinacridone,

quinacridonequinone type compounds, e.g.

quino[2,3-*b*]acridine-6,7,13,14(5H,12H)-tetrone (i.e. quinacridonequinone), and dimethoxyquinacridonequinone and dihydroquinacridone type compounds, e.g. 5,6,12,13-tetrahydroquino[2,3-*b*]acridine-7,14-dione (i.e. a dihydroquinacridone),

dimethoxy dihydroquinacridone and dibenzodihydroquinacridone.

Still further suitable beta-nucleating agents are dicarboxylic acid salts of metals from group 11a of periodic table, e.g. pimelic acid calcium salt and suberic acid calcium salt; and mixtures of dicarboxylic acids and salts of metals from group 11a of the periodic table.

Film

The present invention furthermore provides a film comprising the polypropylene composition as described above. The film may be a non-oriented cast film or a biaxially oriented film (BOPP). Furthermore, the film preferably has a thickness from 1 to 1000 μm, more preferably from 1 to 300 μm, most preferably from 1 to 250 μm. When the film is a cast film, the film preferably has a thickness from 100 to 1000, more preferably from 200 to 300 μm. When the film is a biaxially oriented film, the film may have a thickness from 1 to 100 μm. This is especially advantageous since current attempts are to provide electric systems with higher energy density and efficiency. Reducing the space requirement for a film in film capacitors helps to achieve this goal.

If provided as a cast film with a thickness of 250 μm, the film preferably has a dielectric breakdown field strength, $E_{b,}$63.2%, of 118 kV/mm or more, preferably 122 kV/mm or more, in particular 125 kV/mm or more determined according to IEC 60243-1 at 90 °C and according to IEC 62539. For example, the dielectric breakdown field strength, $E_{b,}$63.2%, of the cast film measured according to IEC 60243-1 at 90 °C and with a thickness of 250 μm and afterwards evaluated according to IEC 62539 may be in the range from 118 to 250 kV/mm, preferably 122 to 200 kV/mm, more preferably 125 to 190 kV/mm.

The conductivity of the cast film according to the present invention may be 1.0 fS/cm or less, preferably less than 0.5 fS/cm. For example, the conductivity of the cast film may be from 0.01 to 1.0 fS/cm, preferably from 0.05 fS/cm to less than 0.5 fS/cm. In this case, the conductivity is taken as the inverse of the DC electrical resistance measured according to ASTM D257 on a 250 μm thick film and at a temperature of 90 °C.

The biaxially oriented polypropylene film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.% of the polypropylene composition as defined above. It is yet even more preferable when the biaxially oriented polypropylene film essentially consists of the polypropylene composition as defined in the present invention. The biaxially oriented polypropylene film preferably has a stretching ratio of at least 4 times, preferably at least 5 times, in the machine direction and at least 4 times, preferably at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 μm) to 5000 Å (0.5 μm).

Brief Description of the Drawings

Embodiments of the present invention are illustrated by way of example and are not limited by the figures of the accompanying drawings in which identical references represent similar elements.
Figs. 1(a)-(c) show atomic force microscope images of several example materials.

Detailed Description of the Drawings and Examples

Measurement Methods

*Quantification of microstructure by NMR spectroscopy*

Quantitative nuclear-magnetic resonance (NMR) spectroscopy was used to quantify the isotacticity and comonomer content of the polymers.
Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125 °C using nitrogen gas for all pneumatics.
For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.
Quantitative $^{13}C\{^1H\}$ NMR spectra were processed, integrated and relevant quantitative properties determined from the integrals using proprietary computer programs.
For polypropylene homopolymers all chemical shifts are internally referenced to the methyl isotactic pentad <mmmm> at 21.85 ppm.
Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.
The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).
Specifically the influence of regio defects and comonomer on the quantification of the tacticity distribution was corrected for by subtraction of representative regio defect and comonomer integrals from the specific integral regions of the stereo sequences.
The isotacticity was determined at the pentad level and reported as the percentage of isotactic pentad (mmmm) sequences with respect to all pentad sequences:

$$[mmmm]\,\% = 100 * (\,mmmm\ /\ \text{sum of all pentads}\,)$$

The absence of ethylene in the high isotactic homopolymer of propylene could be quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects when needed. Integral regions were slightly adjusted

to increase applicability to a wider range of comonomer contents.

The ethylene incorporation in mole percent is computed as follows:

$$E\ [mol\%] = 100 * fE$$

The ethylene incorporation in weight percent is calculated as follows:

$$E\ [wt.\%] = 100 * (\ fE * 28.05\ ) / (\ (fE * 28.05) + ((1-fE) * 42.08)\ )$$

*$MFR_2$*

The $MFR_2$ was measured according to ISO 1133 (at 2.16 kg load) and either at a temperature of 230 °C (for the high isotactic homopolymer of propylene) or at a temperature of 260 °C (cyclic olefin polymer).

*XCS content*

The XCS content was determined in weight percent at 23 °C according to ISO 16152.

*Glass transition temperature Tg*

The glass transition temperature was measured with a differential scanning calorimeter according to ISO 11357 at a scan rate of 10 K/min.

*Melting temperature Tm, crystallization temperature Tc*

Differential Scanning Calorimetry (DSC) experiments were run on a TA Instruments Q2000 device calibrated with Indium, Zinc, Tin according to ISO 11357/1. The measurements were run under nitrogen atmosphere (50 mL $min^{-1}$) on 5 ±0.5 mg samples in a heat/cool/heat cycle with a scan rate of 10 K/min between -30 °C and 225 °C according to ISO 11357/3. Melting (Tm) and crystallization (Tc) temperatures were taken as the peaks of the endotherms and exotherms in the cooling cycle and the second heating cycle respectively.

*Ash content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

*Dielectric breakdown measurement*

The dielectric breakdown strength (also referred to as "dielectric breakdown field strength"), commonly indicated in kV/mm, is a property of gases, liquids and solids.

When the electric field exceeds the breakdown field, breakdown occurs by a discharge channel through the material, connecting the electrodes. In solids, the discharge destroys the material irreversibly, while in gases and liquids damage is temporary and reversible.

Generally, a breakdown event occurs with a high randomness, *i.e.* when identical specimens are tested to establish the breakdown distribution (see details below), high data dispersion is observed and often the data are not normal distributed (see Dissado L. A.; Fothergill J. C."Electrical degradation and breakdown in polymers", IEEE Materials and Devices Series 9, Peter Peregrinus Ltd., 1992). The reason for the random occurrence of breakdown events is the unspecific and localized breakdown initiation, at sites of electric field enhancement and sites of low breakdown strength (see Dissado L. A.; Fothergill J. C. "Electrical degradation and breakdown in polymers", IEEE Materials and Devices Series 9, Peter Peregrinus Ltd., 1992). Generally, structural heterogeneities of the material, inclusions of contaminants or voids (see Chen G.; Davies A.E. The influence of defects on the short-term breakdown characteristics and long-term dc performance of LDPE insulation. IEEE Transactions on Electrical Insulation, 2000, 7, 401-407) and surface roughness (see Rytoluoto L; Gitsas A.; Pasanan S.; Lahti K. Effect of film structure and morphology on the dielectric breakdown characteristics of cast and biaxially oriented polypropylene films. European Polymer Journal, 2017, 95, 606-624) can be

potential sites of breakdown and they are inevitable in industrial production.

*Breakdown testing*

Breakdown strength of solids was tested in a short voltage ramp test. At a temperature of 90 °C, a thin specimen of a cast film (250 μm thick) is sandwiched between electrodes and the voltage is increased (linearly, exponentially, in steps, etc.) until breakdown occurs. The voltage at which the breakdown occurs is the breakdown voltage (in kV) of the specimen (see IEC 60243-1 (2013) - Electric strength of insulating materials - Test methods - Part 1 : Tests at power frequencies).

One then measures the thickness of the specimen at the breakdown spot to obtain dielectric breakdown field strength $E_b$ (in kV/mm). This test is repeated on identically prepared specimens of the material to obtain the breakdown distribution of the material (see Rytoluoto T; Gitsas A.; Pasanan S.; Lahti K. Effect of film structure and morphology on the dielectric breakdown characteristics of cast and biaxially oriented polypropylene films. European Polymer Journal, 2017, 95, 606-624).

*Statistical evaluation*

To evaluate the breakdown distribution (also referred to as "DBD"), IEC 62539 recommends extreme value distributions, such as the 2-parameter Weibull distribution (2-Weibull), the 3-parameter Weibull distribution (3-Weibull), the lognormal distribution and the 1st asymptotic extreme value distribution (1 AEV). Generally, when the breakdown mechanism is not known, a statistical distribution is primarily chosen via fitting quality. However, most authors use the Weibull distribution, of which the cumulative density distribution function for the 3-parameter variant is given by equation 1:

$$F(E_b) = 1 - exp\left\{-\left[\frac{E_b - \delta}{\alpha}\right]^{\beta}\right\}$$

**Equation 1:** Cumulative density function of the Weibull distribution with three parameters α (Scale), β (Shape) and δ (Location)

$$F(E_b) = 1 - exp\left\{-\left[\frac{E_b}{\alpha}\right]^{\beta}\right\}$$

**Equation 2:** Cumulative density function of the Weibull distribution with two parameters α (Scale), β (Shape)

**Equation 1:** Cumulative density function of the Weibull distribution with three parameters α (Scale), β (Shape) and δ (Location)

**Equation 2:** Cumulative density function of the Weibull distribution with two parameters α (Scale), β (Shape)

Therein $F(E_b)$ is the cumulative failure probability at the breakdown field $E_b$, α is the Scale parameter representing the distribution average, β is the Shape parameter representing dispersion, and δ is the location parameter, by some called the threshold parameter. This form of the Weibull distribution (3-Weibull) assumes zero failure probability when the applied field is lower that the threshold, i.e. $F(E_b) = 0$, for $E_b < \delta$. This form of the Weibull distribution is rarely used as most authors assume $\delta = 0$, i.e. failure can possibly occur at any applied field ($F(E_b) > 0$ for $E_b > 0$ (Equation 2).

The following experimental data are based on the 2-parameter Weibull distribution and Shape parameter α is reported as $E_{b,}$63.2% as the (average) breakdown field strength of the BOPP film. To obtain $E_{b,}$63.2% (a) a fitting procedure is required, i.e. the two parameters α and β are varied so that the fitted Weibull distribution matches the experimental data best. This procedure can be performed as a general function of graphing software (e.g. Origin) or of statistical software packages (e.g. Minitab).

*DC-Conductivity*

Electrical conductivity was calculated as the inverse of the electrical resistance as determined in accordance with ASTM D257.

*Atomic force microscope images*

All specimens were taken directly from film samples and cut on an ultra-cryo microtome in the core of the films and perpendicular to the machine direction (MD). No surface treatment has been performed. In addition to the "normal" scan, a qualitative amplitude-frequency-modulation (AM-FM) was made, because this approach gives better differentiation of the different phases. Comparisons were made based one images of 20 x 20 $\mu m^2$ large surface areas of the film.

Materials

The polymers as listed in table 1 below have been used to prepare example materials.

**Table 1:** Polymers used for the production of example materials.

| | |
|---|---|
| HIPP | Capacitor high isotacticity homopolymer PP produced according to Reference Example 1 of WO 2017/064224 A1<br>$MFR_2$ = 3.3-3.4 g/10min<br>Ash content = 8 ppm<br>Isotactic pentad fraction = 96.2%<br>Tc =115 °C<br>XCS = 1.5 wt.%<br>Commercially available as HC300BF from Borealis |
| **cB** | Ethylene-norbornene copolymer<br>Norbornene content = 79.0 wt.%<br>Tg = 158 °C, $MFR_2$ = 5 g/10 min<br>Commercially available as TOPAS COC 6015S-04 from TOPAS |
| **B1** | Ethylene-norbornene copolymer<br>Norbornene content = 75.0 wt.%<br>Tg = 134 °C, $MFR_2$ = 48 g/10 min<br>Commercially available as TOPAS COC 5013S-04 from TOPAS |
| **B2** | Ethylene-norbornene copolymer<br>Norbornene content = 83.0 wt.%<br>Tg = 178 °C, $MFR_2$ = 2 g/10 min<br>Commercially available as TOPAS COC 6017S-04 from TOPAS |

The above polymers have been selected and/or combined in the amounts indicated in table 2 below to obtain several example materials. In order to obtain the comparative example material CE2 and the inventive example materials IE1 and IE2, components have been melt-blended. Comparative example material CE1 corresponds to a pure propylene homopolymer.

**Table 2:** Composition of the sample materials.

| | CE1 | CE2 | IE 1 | IE 2 |
|---|---|---|---|---|
| **HIPP [wt.%]** | 100 | 85 | 85 | 85 |
| **cB [wt.%]** | - | 15 | - | - |
| **B1 [wt.%]** | - | - | 15 | - |
| **B2 [wt.%]** | - | - | - | 15 |

Film samples have been produced from the sample materials on a small-scale laboratory cast film line from company COLLIN Lab & Pilot Solutions GmbH. The line consists of an extruder with a Ø 30 mm screw with an L/D ration of 30. The extruder temperature has been set at 235 °C, the melt temperature was 235 °C and has been recorded after 45 min of process stabilization. The extruder is followed by a die with a width of 300 mm. The die has a flexible die lip with a die gap of 0.5 - 1.5 mm. The line has been run at a constant throughput of 8 kg/h and a line speed of 10 m/min. The end width of the film was cut to 270 mm. The film was produced with a thickness of 250 $\mu m$.

Afterwards, the morphology of the films made from CE2 and of the films made from IE1 and IE2 has been examined with atomic force microscopy. Doing so, the dispersion properties within 20 x 20 μm² large surface areas of the specimens have been determined in terms of a $d_{90}$-value for the domains of the ethylene-norbornene copolymer. The results are listed in table 3 below.

In this context, it is to be understood that the portion of particles with a size, i.e. maximum extension, below the reported $d_{90}$ value is 90%.

**Table 3:** Dispersion properties in 20 x 20 μm² large surface areas of the films.

| | **CE2** | **IE1** | **IE2** |
|---|---|---|---|
| **$d_{90}$** | > 2.0 μm | < 2.0 μm | < 2.0 μm |

As can be seen from table 3 and **figures 1(a)-(c),** the inventive films IE1 and IE2 show very small and, thus, finely dispersed inclusions. At least 90% of the ethylene-norbornene copolymer domains in these films have a size that is less than 2.0 μm. Thus the dispersion quality in the inventive films is excellent, whereas the comparative film CE2 has a considerable portion of ethylene-norbornene copolymer domains with a size greater than 2.0 μm.

Further, the dielectric breakdown voltage and the DC conductivity have been measured on comparative films CE1 and CE2 and inventive films IE1 and IE2 according to the above-mentioned methods. The results are shown in table 4 below.

**Table 4:** Dielectric breakdown voltage and DC conductivity measurements

| | **CE1** | **CE2** | **IE1** | **IE2** |
|---|---|---|---|---|
| **$E_b$,63.2% [kV/mm]** | 117.2 | 118.0 | 125.3 | 122.3 |
| **DC conductivity [fS/m]** | 0.9 | 0.5 | 0.6 | 0.3 |

As can be seen from table 4, the inventive films IE1 and IE2 show a significantly better dielectric breakdown voltage than the comparative films CE1 and CE2. In addition, the inventive films have at least a comparable or even better DC conductivity than the comparative films.

**Claims**

**1.** Polypropylene composition comprising

83 to 87 wt.% based on the total weight of the polypropylene composition of propylene homopolymer (A), and 13 to 17 wt.% based on the total weight of the polypropylene composition of a cyclic olefin polymer (B) comprising cyclic olefin units and non-cyclic olefin units,

wherein the content of the cyclic olefin units is in a range of from 73 to 77 wt.% or in a range from 82 to 86 wt.%, based on the total weight of the cyclic olefin polymer (B).

**2.** Polypropylene composition according to claim 1, wherein the propylene homopolymer (A) has a melt flow rate $MFR_2$ (230 °C / 2.16 kg), measured according to ISO 1133, from 1.0 to 10 g/10 min, preferably from 1.0 to 7.0 g/10 min, more preferably from 1.0 to 5.0 g/10 min.

**3.** Polypropylene composition according to claim 1 or 2, wherein the propylene homopolymer (A) has an ash content, measured according to ISO 3451-1 (1997), of 60 ppm or less, preferably 30 ppm or less.

**4.** Polypropylene composition according to one of the preceding claims, wherein the propylene homopolymer (A) is a high isotactic polypropylene, preferably a high isotactic polypropylene having a content of isotactic pentad fraction, measured by $^{13}C$-NMR spectroscopy, from 93 to 99.5 %, preferably 95 to 99.0 %, more preferably from 96 to 98.5%.

**5.** Polypropylene composition according to one of the preceding claims, wherein the propylene homopolymer (A) has a xylene soluble content, measured according to ISO 16152, from 0.1 to 4.0 wt.%, preferably from 0.3 to 2.0 wt.%.

**6.** Polypropylene composition according to one of the preceding claims, wherein the propylene homopolymer (A) has a

crystallization temperature ($T_c$), measured according to ISO 11357, from 110 to 130 °C.

**7.** Polypropylene composition according to one of the preceding claims, wherein, when the content of the cyclic olefin units is in the range of from 73 to 77 wt.%, the cyclic olefin polymer (B) has:

a glass transition temperature ($T_g$), measured according to ISO 11357, in a range of from 125 to 145 °C, preferably from 130 to 140 °C; and/or
a melt flow rate $MFR_2$ (260 °C / 2.16 kg), measured according to ISO 1133, in a range from 40 to 55 g/10 min, preferably from 45 to 50 g/10 min.

**8.** Polypropylene composition according to one of claims 1 to 6, wherein, when the content of the cyclic olefin units is in the range of from 82 to 86 wt.%, the cyclic olefin polymer (B) has:

a glass transition temperature ($T_g$), measured according to ISO 11537, in a range from 170 to 185 °C, preferably from 175 to 180 °C; and/or
a melt flow rate $MFR_2$ (260 °C / 2.16 kg), measured according to ISO 1133, in a range from 0.5 to 5 g/10 min, preferably from 1 to 5 g/10 min.

**9.** Polypropylene composition according to one of the preceding claims,

wherein the cyclic olefin units are selected from the group consisting of cyclopentadiene units, norbornene units, tetracyclododecen units and derivatives thereof, and preferably are norbornene units, and
wherein the non-cyclic olefin units are selected from linear $C_2$-$C_8$ alpha-olefin units, and preferably are ethylene units.

**10.** Film comprising the polypropylene composition according to one of the preceding claims, wherein the film is a non-oriented cast film or a biaxially oriented film.

**11.** Film according to claim 10, wherein the film is a non-oriented cast film having a dielectric breakdown field strength, $E_{b,}$63.2%, of 118 kV/mm or more, preferably 122 kV/mm or more, more preferably 125 kV/mm or more, wherein the dielectric breakdown field strength, $E_{b,}$63.2%, is measured on a 250 μm thick film according to IEC 60243-1 at a temperature of 90 °C and determined according to IEC 62539.

**12.** Film according to one of claims 10 and 11, wherein the film is a non-oriented cast film having a conductivity of 1 fS/cm or less, preferably less than 0.5 fS/cm, when taken as the inverse of the DC electrical resistance measured according to ASTM D257 on a 250 μm thick film and at a temperature of 90 °C.

**13.** Capacitor comprising the film according to claim 10, wherein the film is a biaxially oriented film.

**Figure 1** 1/1

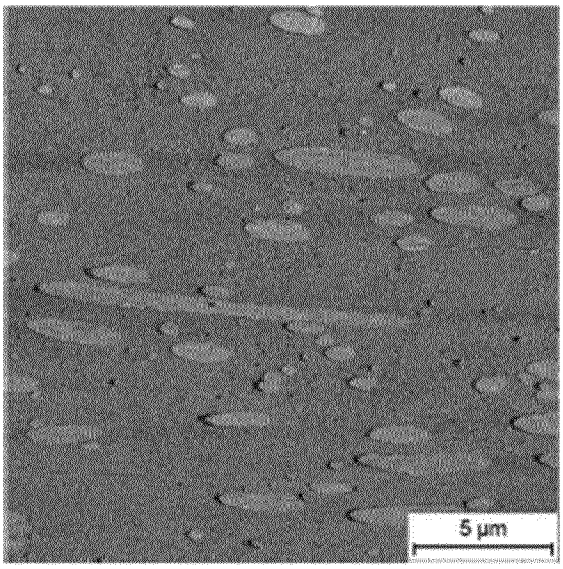


**(a)**

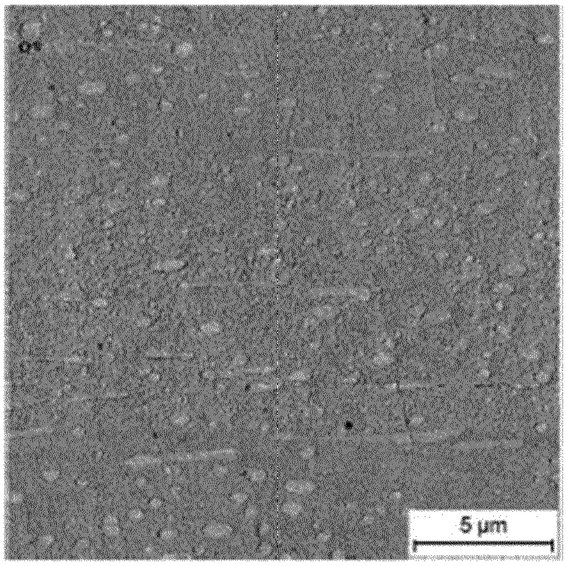


**(b)**

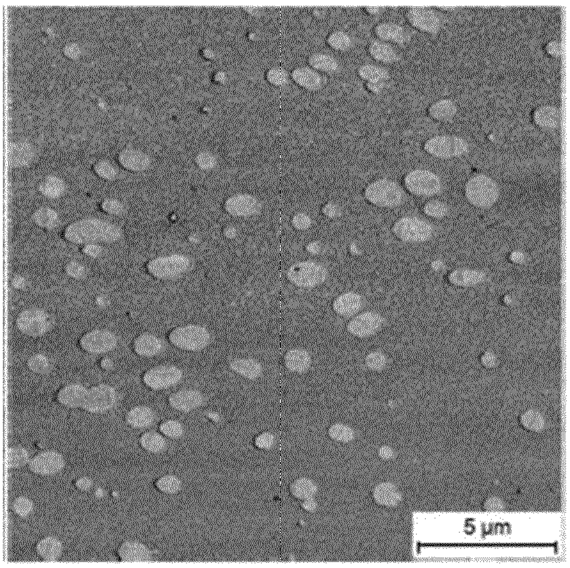


**(c)**

Europäisches Patentamt
European Patent Office
Office européen des brevets

# EUROPEAN SEARCH REPORT

Application Number
EP 23 18 4456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2018/210854 A1 (TDK ELECTRONICS AG [DE]) 22 November 2018 (2018-11-22)<br>* claims 1,2,4-6,7,9,11 *<br>----- | 1-13 | INV.<br>B32B27/32 |
| X | WO 2022/089771 A1 (TOPAS ADVANCED POLYMERS GMBH [DE]) 5 May 2022 (2022-05-05)<br>* claims 1,7-11,16 *<br>* page 16; example 5; table 1 *<br>----- | 1-13 | |

TECHNICAL FIELDS SEARCHED (IPC)

H01G
B32B
C08L

The present search report has been drawn up for all claims

1

| Place of search | Date of completion of the search | Examiner |
|---|---|---|
| Munich | 13 December 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 4456

This annex lists the patent family members relating to the patent documents cited in the above-mentioned European search report. The members are as contained in the European Patent Office EDP file on
The European Patent Office is in no way liable for these particulars which are merely given for the purpose of information.

13-12-2023

| Patent document cited in search report | Publication date | Patent family member(s) | Publication date |
|---|---|---|---|
| WO 2018210854 A1 | 22-11-2018 | CN 110914939 A | 24-03-2020 |
| | | DE 102017118202 A1 | 15-11-2018 |
| | | EP 3625811 A1 | 25-03-2020 |
| | | ES 2912779 T3 | 27-05-2022 |
| | | JP 6799179 B2 | 09-12-2020 |
| | | JP 2020520127 A | 02-07-2020 |
| | | US 2021079179 A1 | 18-03-2021 |
| | | WO 2018210854 A1 | 22-11-2018 |
| WO 2022089771 A1 | 05-05-2022 | CN 116368175 A | 30-06-2023 |
| | | DE 102020006588 A1 | 28-04-2022 |
| | | EP 4237471 A1 | 06-09-2023 |
| | | JP 2023548065 A | 15-11-2023 |
| | | KR 20230104643 A | 10-07-2023 |
| | | US 2023391966 A1 | 07-12-2023 |
| | | WO 2022089771 A1 | 05-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101724195 A
- EP 2995641 A1
- WO 2018210854 A1
- WO 2018197034 A1
- WO 2017064224 A1


### Non-patent literature cited in the description


- *Macromol. Chem. Phys.*, 1998, vol. 199, 1221-1232
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- Electrical degradation and breakdown in polymers. **DISSADO L. A.** ; **FOTHERGILL J. C.** IEEE Materials and Devices Series. Peter Peregrinus Ltd., 1992, vol. 9
- **CHEN G.** ; **DAVIES A.E.** The influence of defects on the short-term breakdown characteristics and long-term dc performance of LDPE insulation. *IEEE Transactions on Electrical Insulation*, 2000, vol. 7, 401-407
- **RYTOLUOTO L** ; **GITSAS A.** ; **PASANAN S.** ; **LAHTI K.** Effect of film structure and morphology on the dielectric breakdown characteristics of cast and biaxially oriented polypropylene films. *European Polymer Journal*, 2017, vol. 95, 606-624
- **RYTOLUOTO T** ; **GITSAS A.** ; **PASANAN S.** ; **LAHTI K.** Effect of film structure and morphology on the dielectric breakdown characteristics of cast and biaxially oriented polypropylene films. *European Polymer Journal*, 2017, vol. 95, 606-624